# EUROPEAN PATENT APPLICATION

(11) **EP 4 730 525 A1**
(43) Date of publication of application: **22.04.2026**
(21) Application number: 24845967.9
(22) Date of filing: 19.07.2024
(51) Int. Cl.: H01M 50/244, B65G 47/90

(54) **BATTERY MODULE TRANSFER METHOD AND TRANSFER HEAD**

(30) Priority: 21.07.2023 KR 20230095185
(71) Applicant: Valeo Kapec Co., Ltd., Daegu 42709 (KR)
(72) Inventor: GWAK, Giyun, Daegu 42709 (KR); LEE, Seongeun, Daegu 42709 (KR)
(74) Representative: Isarpatent
(86) International application number: PCT/KR2024/010519
(87) International publication number: WO 2025/023665

(57) **Abstract**

Disclosed are a battery module transfer method and a battery module transfer head. The battery module transfer method includes a first connection step of connecting a first arm of a transfer head to a first grip unit of a battery module, a second connection step of connecting a second arm of the transfer head to a second grip unit of the battery module, and a step of moving the transfer head to transfer the battery module. A direction in which the first arm is connected to the first grip unit is a direction intersecting a direction in which the second arm is connected to the second grip unit.

## Description

### [Technical Field]

The present disclosure relates to a method of transferring a battery module and to a transfer head used for the method.

### [Background Art]

Secondary batteries are being widely used as energy sources for mobile devices. In addition, the secondary batteries attract attention as power sources for electric vehicles (EVs), hybrid electric vehicles (HEVs), and the like.

A basic unit of the secondary battery is a battery cell. One or two battery cells are used for a small-scale mobile, whereas a battery pack is used for medium-scale or large-scale apparatuses such as vehicles. The battery pack implements a high output and a high capacity by electrically connecting a plurality of battery modules. The battery module is provided in the form of a single block obtained by connecting a plurality of battery cells.

In order to manufacture the battery pack by combining the battery modules into a single configuration, it is necessary to transfer the battery modules. A large number of spaces may be required depending on methods of connecting an arm of a transfer apparatus and grip structures of the battery modules.

The above-mentioned background art is technical information that the inventors have retained to derive exemplary embodiments of the present disclosure or have obtained in the course of deriving the exemplary embodiments of the present disclosure, and cannot be thus said to be technical information publicly known to the public before filing the present application.

### [Disclosure]

### [Technical Problem]

One object of the present disclosure is to provide a battery module transfer method and a transfer head that are capable of minimizing a space for connecting an arm of a transfer head to a grip structure of a battery module in order to transfer the battery module.

### [Technical Solution]

In order to achieve the above-mentioned object, a battery module transfer method according to one aspect of the present disclosure may include: a first connection step of connecting a first arm of a transfer head to a first grip unit of a battery module; a second connection step of connecting a second arm of the transfer head to a second grip unit of the battery module; and a step of moving the transfer head to transfer the battery module, in which a connection direction in which the first arm is connected to the first grip unit is a direction intersecting a connection direction in which the second arm is connected to the second grip unit.

In this case, the connection direction in which the first arm is connected to the first grip unit may be a direction perpendicular to the connection direction in which the second arm is connected to the second grip unit.

In this case, the connection direction in which the second arm is connected to the second grip unit may be defined based on a longitudinal direction of the battery module, and the connection direction in which the first arm is connected to the first grip unit may be defined based on a width direction of the battery module intersecting the longitudinal direction.

In this case, the connection direction may be a direction in which one of the first and second arms is inserted into one of the first and second grip units corresponding to one of the first and second arms.

In this case, the first connection step may include: a step of connecting the first-first arm to the first-first grip unit; and a step of connecting the first-second arm to the first-second grip unit, and a connection direction in which the first-first arm is connected to the first-first grip unit may be a direction different from a connection direction in which the first-second arm is connected to the first-second grip unit.

In this case, the connection direction in which the first-first arm is connected to the first-first grip unit may be a direction opposite to the connection direction in which the first-second arm is connected to the first-second grip unit.

In this case, the first connection step may include a step of allowing the first arm to approach the first grip unit before the first arm is connected to the first grip unit, the second connection step may include a step of allowing the second arm to approach the second grip unit before the second arm is connected to the second grip unit, and an approaching direction in which the first arm approaches the first grip unit may be a direction identical to an approaching direction in which the second arm approaches the second grip unit.

A battery module transfer method according to another aspect of the present disclosure may include: a step of connecting a first-first arm of a transfer head to a first-first grip unit of a battery module; a step of connecting a first-second arm of the transfer head to a first-second grip unit of the battery module; and a transfer step of moving the transfer head to transfer the battery module, in which a connection direction in which the first-first arm is connected to the first-first grip unit is a direction opposite to a connection direction in which the first-second arm is connected to the first-second grip unit.

In this case, the first-first arm and the first-second arm may move in a width direction intersecting a longitudinal direction of the battery module so as to be connected to one of the first-first grip unit and the first-second grip unit corresponding to one of the first-first arm and the first-second arm.

A battery module transfer head according to still another aspect of the present disclosure may include: a body; a first arm movably installed on the body and positioned to correspond to a first grip unit of a battery module; a first connection unit configured to move the first arm and connect the first arm to the first grip unit; a second arm movably installed on the body and positioned to correspond to a second grip unit of the battery module; and a second connection unit configured to move the second arm and connect the second arm to the second grip unit, in which a connection direction in which the first connection unit connects the first arm to the first grip unit intersects a connection direction in which the second connection unit connects the second arm to the second grip unit.

In this case, the first grip unit may include a first-first grip unit and a first-second grip unit disposed to face each other, the first arm may include: a first-first arm formed to correspond to the first-first grip unit; and a first-second arm formed to correspond to the first-second grip unit, the first connection unit may include: a first-first connection unit configured to connect the first-first arm to the first-first grip unit; and a first-second connection unit configured to connect the first-second arm to the first-second grip unit, and a connection direction in which the first-first connection unit connects the first-first arm to the first-first grip unit may be a direction opposite to a connection direction in which the first-second connection unit connects the first-second arm to the first-second grip unit.

In this case, the second grip unit may include a second-first grip unit and a second-second grip unit, the second arm may include: a second-first arm formed to correspond to the second-first grip unit; and a second-second arm formed to correspond to the second-second grip unit, and the second connection unit may be configured to move the second-first arm and the second-second arm in the same direction.

In this case, the second connection unit may include: a mounting frame on which the second-first arm and the second-second arm are installed; and an actuator configured to operate the mounting frame straight.

A battery module transfer head according to yet another aspect of the present disclosure may include: a body; a first-first arm movably installed on the body and positioned to correspond to a first-first grip unit of a battery module; a first-first connection unit configured to move the first-first arm and connect the first-first arm to the first-first grip unit; a first-second arm movably installed on the body and positioned to correspond to a first-second grip unit of the battery module; and a first-second connection unit configured to move the first-second arm and connect the first-second arm to the first-second grip unit, in which a connection direction in which the first-first connection unit connects the first-first arm to the first-first grip unit is a direction opposite to a connection direction in which the first-second connection unit connects the first-second arm to the first-second grip unit.

In this case, the first-first arm and the first-second arm may be configured to move in a width direction intersecting a longitudinal direction of the battery module so as to be connected to one of the first-first grip unit and the first-second grip unit corresponding to one of the first-first arm and the first-second arm.

A battery module transfer head according to still yet another aspect of the present disclosure may include: a body; a first arm installed on the body, configured to be movable in a first direction, and positioned to correspond to a first grip unit of a battery module; and a second arm installed on the body, configured to be movable in a second direction, and positioned to correspond to a second grip unit of the battery module, in which the first arm includes a first finger configured to be connected to the first grip unit when the first finger moves in the first direction, in which the second arm includes a second finger configured to be connected to the second grip unit when the second finger moves in the second direction, and in which the first direction and the second direction are set to intersect each other.

In this case, one of the first and second fingers may be formed to be inserted into one of the first and second grip units so as to be connected to one of the first and second grip units.

In this case, the battery module transfer head may further include: a stopping unit installed on the body and configured to stop the body at a preset position with respect to the battery module.

In this case, the stopping unit may include an insertion rod configured to be inserted into an accommodation hole of a fixing bracket of the battery module when the body moves toward the battery module.

In this case, the stopping unit may include a position detector configured to detect whether the body reaches the preset position while the body moves toward the battery module.

### [Advantageous Effects]

According to the battery module transfer method and the battery module transfer head according to the present disclosure configured as described above, before the transfer head is moved to transfer the battery module, the first arm of the transfer head may be connected to the first grip unit of the battery module, the second arm may be connected to the second grip unit, and the connection directions of the first and second arms may intersect each other, thereby minimizing the space required to connect the transfer head and the battery module.

### [Description of Drawings]

FIG. 1 is an assembled perspective view of a battery module according to an embodiment of the present disclosure.
FIG. 2 is an exploded perspective view of the battery module in FIG. 1.
FIG. 3 is a partially assembled perspective view illustrating a coupling relationship between a left grip unit and a first busbar block in FIG. 1.
FIG. 4 is a partially cut-away perspective view illustrating a state in which the left grip unit in FIG. 1 is cut out.
FIG. 5 is a perspective view illustrating the left grip unit in FIG. 1.
FIG. 6 is a perspective view illustrating the left grip unit in FIG. 5 in another direction.
FIG. 7 is an assembled perspective view illustrating the battery module in FIG. 1 in another direction.
FIG. 8 is an exploded perspective view illustrating a state in which a second mounting cover in FIG. 7 is separated.
FIG. 9 is an enlarged partial perspective view illustrating the left grip unit in FIG. 8.
FIG. 10 is a partial perspective view illustrating the left grip unit in FIG. 9 at another angle.
FIG. 11 is a perspective view illustrating a state in which a battery module transfer head according to another embodiment of the present disclosure is connected to the battery module.
FIG. 12 is a perspective view illustrating the battery module and the transfer head in a direction different from the direction in FIG. 11.
FIG. 13 is a perspective view illustrating a state in which the battery module and the transfer head are coupled in accordance with a modified example in FIG. 12.
FIG. 14 is a flowchart illustrating a battery module transfer method according to still another embodiment of the present disclosure.
FIG. 15 is a conceptual view illustrating a method of connecting the transfer head to the battery module.
FIG. 16 is a conceptual view illustrating another method of connecting the transfer head to the battery module.
FIG. 17 is a conceptual view illustrating a case in which the battery modules are continuously disposed and then the transfer head is separated from the battery module.

### [Mode for Invention]

Hereinafter, exemplary embodiments of the present disclosure will be described in detail with reference to the accompanying drawings.

The present disclosure is not limited to the embodiments disclosed herein, but will be variously changed and implemented in various different forms. The embodiments are provided so that the present disclosure will be thorough and complete, and also to provide a more complete understanding of the scope of the present disclosure to those of ordinary skill in the art. Therefore, it should be understood that the present disclosure is not limited to the embodiments disclosed below, but the configuration of any one embodiment and the configuration of another embodiment can be substituted or added, and the present disclosure includes all alterations, equivalents, and alternatives that are included in the technical spirit and scope of the present disclosure.

It should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure. In the drawings, sizes or thicknesses of constituent elements may be exaggerated, increased, or decreased for convenience of understanding, but the protection scope of the present disclosure should not be restrictively construed.

The terms used in the present specification are used only for the purpose of describing particular examples or embodiments and are not intended to limit the present disclosure. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present disclosure pertains. The terms such as those defined in a commonly used dictionary should be interpreted as having meanings consistent with meanings in the context of related technologies and should not be interpreted as ideal or excessively formal meanings unless explicitly defined in the present application.

In the embodiment, a battery module may have an approximately rectangular parallelepiped shape. Therefore, based on the drawings, an upper side of an outer surface of the battery module is referred to as an upper surface, and a lower side of the outer surface of the battery module is referred to as a lower surface. A surface of the battery module, which is viewed from the front side, is referred to as a front surface, and a surface of the battery module, which is viewed from the rear side, is referred to as a rear surface. The remaining two lateral surfaces are respectively referred to as a left surface positioned at a left side of the front surface and a right surface positioned at a right side of the front surface. A direction in which the front surface and the rear surface are connected may be referred to as a longitudinal direction, and a direction in which the upper surface and the lower surface are connected may be referred to as a height direction. A direction in which the left surface and the right surface are connected may be referred to as a width direction. The longitudinal direction, the width direction, and the height direction may be perpendicular to one another.

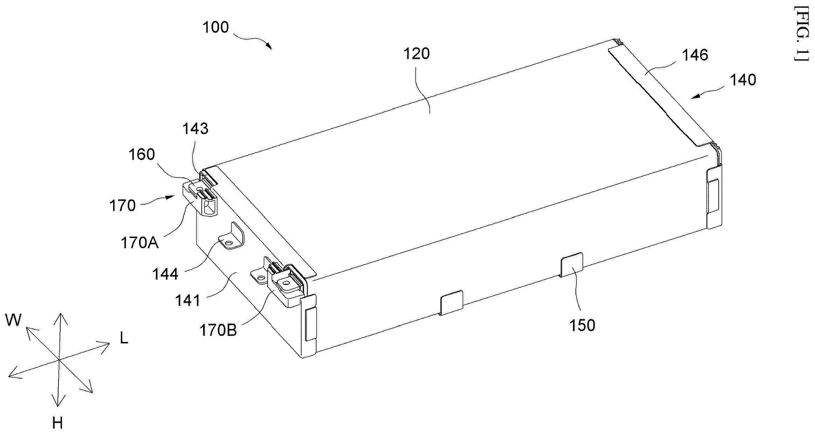

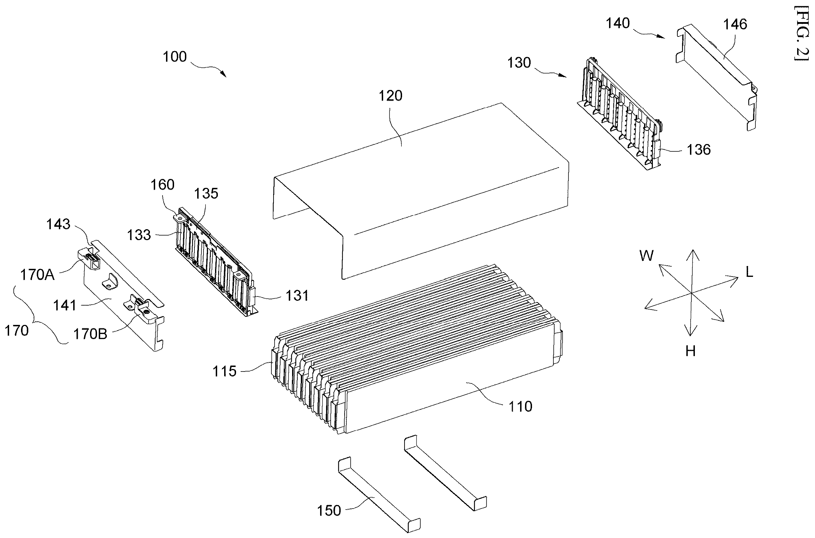

FIG. 1 is an assembled perspective view illustrating a battery module according to an embodiment of the present disclosure, and FIG. 2 is an exploded perspective view illustrating the battery module in FIG. 1.

With reference to the present drawings, a battery module 100 may include battery cells 110, cover units 120, 130, 140, and 150, output terminals 160, and grip units 170.

The battery cell 110 is a component serving as a minimum unit for storing electrical energy. The battery cell 110 may have a flat rectangular parallelepiped shape as a whole. In addition, the battery cell 110 may be formed to extend in a longitudinal direction L. The battery cells 110 may be provided as a plurality of battery cells 110 disposed to overlap one another in a width direction W. The plurality of battery cells 110, which overlap one another as described above, may define a block shape corresponding to an external appearance of the battery module 100. The plurality of battery cells 110 are electrically connected to one another in series or parallel.

The cover units 120, 130, 140, and 150 are components that surround the plurality of battery cells 110. The cover units 120, 130, 140, and 150 may surround all surfaces of the plurality of battery cells 110. Specifically, the upper surface, the left surface, and the right surface may be covered by a top cover 120. The front surface and the rear surface may be covered by busbar blocks 130 and mounting covers 140. The lower surface may be partially covered by straps 150. The bottom surface may be disposed to be in contact with a cooling plate (not illustrated) in a battery pack. Some of the top cover 120, the busbar block 130, the mounting cover 140, and the strap 150, e.g., the strap 150 may not be provided, as necessary.

After the busbar blocks 130 are coupled to and surround the plurality of battery cells 110, the mounting covers 140 are positioned to be farther from the battery cells 110 than the busbar blocks 130 from the battery cells 110. In case that the busbar block 130 is made by using an injection-molded product (block body) and metal (connection busbar), the mounting cover 140 may be made of a metallic material.

The busbar blocks 130 may include a first busbar block 131 positioned adjacent to the front surface, and a second busbar block 136 positioned adjacent to the rear surface. The first busbar block 131 has connection busbars 133 configured to connect electrode leads 115 of the adjacent battery cells 110. The second busbar block 136 may have approximately the same configuration as the first busbar block 131. The first and second busbar blocks 131 and 136 may further include circuit boards 135 connected to each other by a flexible printed circuit board (FPCB). In addition, the first and second busbar blocks 131 and 136 may further include measurement components for measuring voltages, temperatures, and the like of the battery cells 110. The measurement components may also be electrically connected to the circuit boards 135. The busbar block 130 may be referred to as a connection block because the busbar block 130 connects the plurality of battery cells 110.

The mounting covers 140 may include a first mounting cover 141 configured to surround the first busbar block 131, and a second mounting cover 146 configured to surround the second busbar block 130. The first mounting cover 141 may have exposure portions 143 through which the output terminals 160 are exposed. The exposure portion 143 may be positioned in an upper corner region while corresponding to the output terminal 160. Fixing brackets 144 may be installed on the first mounting cover 141. The fixing bracket 144 is used to fix the battery module 100 to a frame (not illustrated) of the battery pack. The second mounting cover 146 may have approximately the same configuration as the first mounting cover 141.

The output terminal 160 is a component that outputs power, which is stored in the plurality of battery cells 110, to the outside. The output terminal 160 is electrically connected to the plurality of battery cells 110. To this end, the output terminal 160 may be coupled to or integrated with one of the connection busbars 133. The output terminals 160 may be arranged approximately in the longitudinal direction L and exposed to the outside through the exposure portions 143. The output terminals 160 may be disposed one by one in the exposure portions 143 at two opposite sides of an upper portion of the first mounting cover 141. Because the output terminals 160 and the busbar blocks 130 electrically connect the plurality of battery cells 110 and output power from the plurality of battery cells 110, the output terminals 160 and the busbar blocks 130 may be collectively referred to as connection-output units.

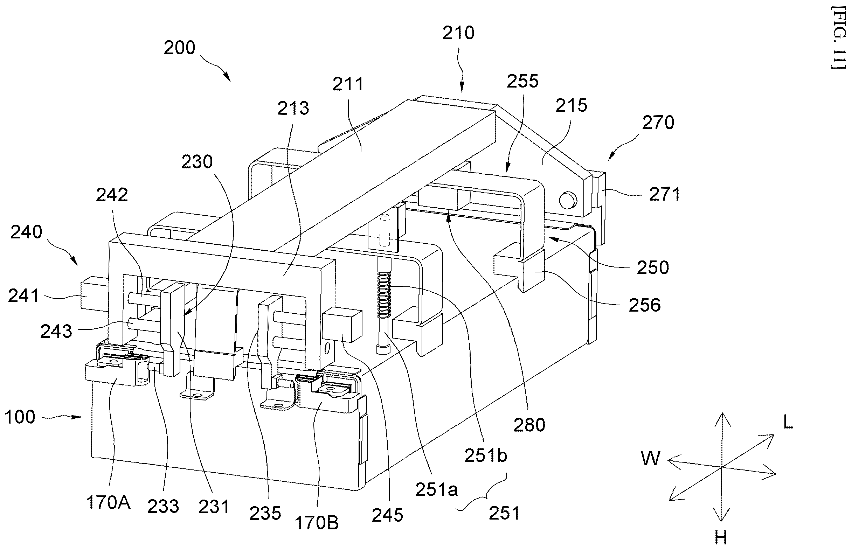

The grip unit 170 may be connected to an arm 230 (see FIG. 11) of a transfer head 200 and used for the transfer head 200 to transfer the battery cell 110. The grip units 170 may be coupled to the first mounting cover 141. In addition, the grip units 170 may be disposed to overlap the connection busbars 133 when the busbar block 130 is viewed from the first mounting cover 141. The grip units 170, together with the output terminal 160, may protrude outward from the first mounting cover 141 in the longitudinal direction L. The grip units 170 may include a left grip unit 170A and a right grip unit 170B corresponding to the pair of output terminals 160.

The left grip unit 170A may be disposed adjacent to or disposed to be in contact with the left output terminal 160. The left grip unit 170A may be disposed to face the output terminal 160. In the present embodiment, the left grip unit 170A is disposed to correspond to a lower surface and a right surface of the output terminal 160.

The right grip unit 170B may have approximately the same structure as the left grip unit 170A. The right grip unit 170B and the left grip unit 170A may be disposed to face each other. Specifically, the right grip unit 170B and the left grip unit 170A may be arranged to be symmetrical to each other with respect to a centerline (defined in a height direction H) of the first mounting cover 141.

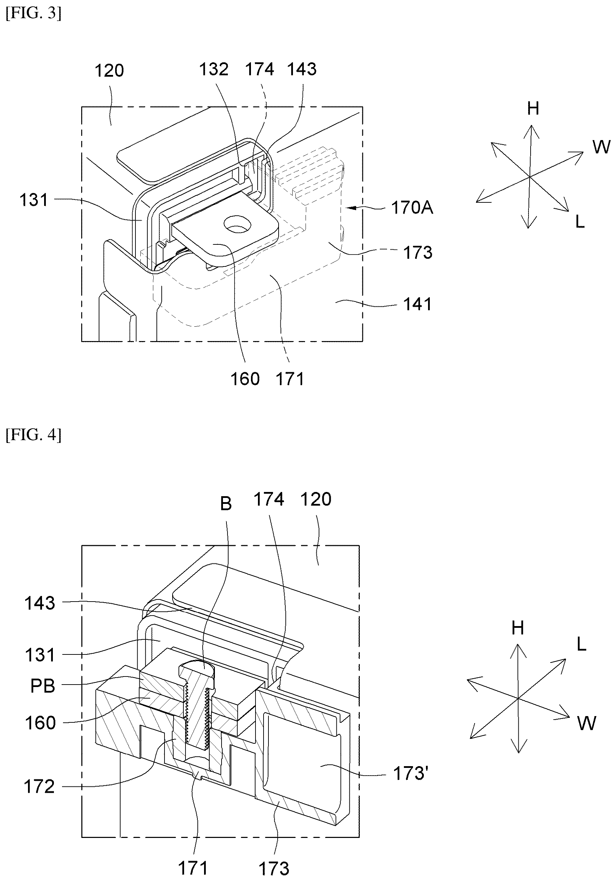

FIG. 3 is a partially assembled perspective view illustrating a coupling relationship between the left grip unit and the first busbar block in FIG. 1.

With reference to the present drawing, a catching plate 174, which is a part of the left grip unit 170A, may be disposed to be caught by the first mounting cover 141. Specifically, the catching plate 174 is supported at one end of the first mounting cover 141 formed with the exposure portion 143. Therefore, the catching plate 174 may be prevented from moving to the right side in a width direction W.

In addition, the catching plate 174 may also be coupled to the first busbar block 131. Specifically, the first busbar block 131 is provided with a fixing groove 132. The catching plate 174 may be inserted into the fixing groove 132 in the longitudinal direction L. Therefore, the catching plate 174 may be prevented from moving in the height direction H, the width direction W, or the longitudinal direction L relative to the first busbar block 131.

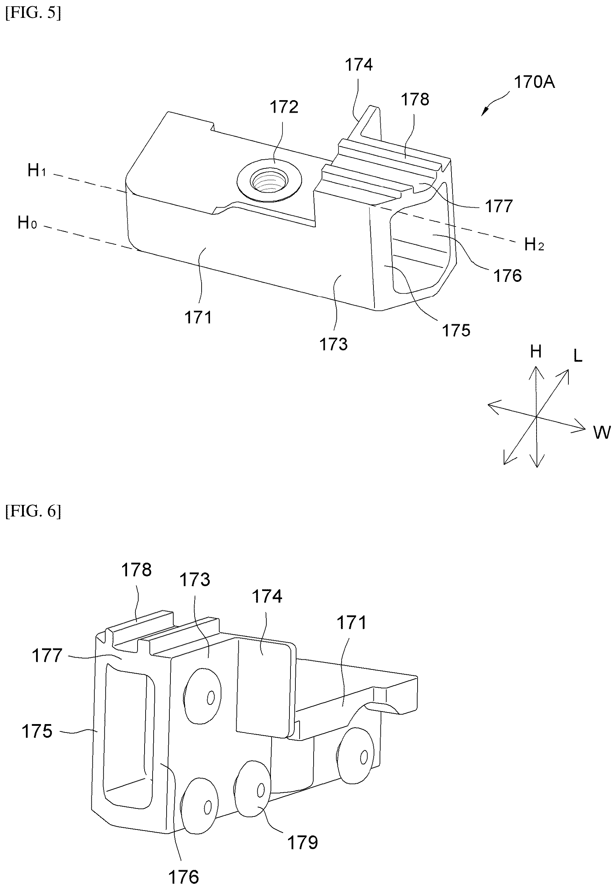

The above-mentioned coupling relationship between the catching plate 174, the first busbar block 131, and the first mounting cover 141 may assist the main coupling between the left grip unit 170A and the first mounting cover 141 coupled by fusion protrusions 179 (FIG. 6), and the main coupling will be described below.

FIG. 4 is a partially cut-away perspective view illustrating a state in which the left grip unit in FIG. 1 is cut out.

With reference to the present drawing, the left grip unit 170A may have a support portion 171 and an accommodation portion 173.

The support portion 171 supports the coupling between the output terminal 160 and a power output busbar PB. The power output busbar PB is configured to electrically connect the battery module 100 to another battery module, a power relay assembly, or the like. The power output busbar PB may be bent in a state in which the power output busbar PB is connected to the output terminal 160. The power output busbar PB may be disposed adjacent to the left or right surface of the battery module 100 and extend in the longitudinal direction L. In order to simplify the present drawings, the power output busbar PB is briefly illustrated only as a portion, which corresponds to an upper portion of the output terminal 160, in the present drawings.

The support portion 171 may be positioned below the output terminal 160. The support portion 171 may be coupled to a coupling member configured to couple the power output busbar PB and the output terminal 160. For example, in case that the coupling member is a bolt B, the support portion 171 is coupled to the bolt B. To this end, the support portion 171 may be provided with a nut 172 screw-coupled to the bolt B. In case that a body of the support portion 171 is an injection-molded product, the nut 172 may be a metal member inserted into the body.

The accommodation portion 173 is a component that accommodates the arm so as to be connected to the arm. The accommodation portion 173 has an insertion space 173' into which the arm is inserted. With reference to FIG. 1 or 2, the pair of accommodation portions 173 may be formed such that sides thereof, which face each other, are opened. The pair of insertion spaces 173' are opened toward each other.

FIG. 5 is a perspective view illustrating the left grip unit in FIG. 1, and FIG. 6 is a perspective view illustrating the left grip unit in FIG. 5 in another direction.

With reference to the present drawings, the accommodation portion 173 may have a larger size in the height direction H than the support portion 171. Specifically, even though the accommodation portion 173 and the support portion 171 start from the same level H0, a level H1, at which the support portion 171 extends in the height direction H, may be lower than a level H2 at which the accommodation portion 173 extends. Therefore, the output terminal 160 and the power output busbar PB, which are disposed above the support portion 171, may be structurally insulated from the arm that enters the accommodation portion 173.

The accommodation portion 173, specifically, the insertion space 173' may have a cross-sectional structure that prevents the arm from moving in a radial direction on a central axis of the accommodation portion 173 in case that the arm is inserted into the accommodation portion 173. In the present embodiment, a cross-section (taken along a plane defined in the longitudinal direction L and the height direction H) of the accommodation portion 173 may have a quadrangular shape. However, the shape of the cross-section of the accommodation portion 173 is not limited to the quadrangular shape, and the cross-section of the accommodation portion 173 may have a circular shape or another polygonal shape, such as a triangular shape. In addition, a cross-sectional shape of the accommodation portion 173 is not a continuous shape, but may be a shape having a partially removed portion. The accommodation portion 173 may have a quadrangular shape, a triangular shape, or the like as a whole, but a bottom surface of the accommodation portion 173 may be completely removed.

The insertion space 173' of the accommodation portion 173 may have a size that allows the arm to be easily inserted into the insertion space 173'. Because the accommodation portion 173 is positioned in a region that does not interfere with the power output busbar PB, a constraint on the size of the accommodation portion 173 is small. In addition, because the accommodation portion 173 is obtained by utilizing a space already ensured by the protruding output terminal 160, a degree to which a volume of a space occupied by the battery module 100 is increased by the size of the accommodation portion 173 is small. This configuration may be more clearly understood based on the fact that the accommodation portion 173 is disposed between the pair of output terminals 160, and a degree to which the accommodation portion 173 protrudes in the longitudinal direction L is within a protrusion limit of the output terminal 160.

The accommodation portion 173 may have a front wall 175, a rear wall 176, and an upper wall 177. The front wall 175 and the rear wall 176 may be disposed to face each other. The upper wall 177 is a portion that connects the front wall 175 and the rear wall 176.

The front wall 175 and the rear wall 176 are sequentially arranged in an approaching direction of the arm. The approaching direction may be a direction from the front surface toward the rear surface in the longitudinal direction L. The front wall 175 may have a smaller width than the rear wall 176 in an insertion direction of the arm. The insertion direction refers to a direction in which the arm is inserted into the insertion space 173' in the width direction W. Because the arm is connected to the grip unit 170 when the arm is inserted into the accommodation portion 173, the insertion direction may also be referred to as a connection direction. The insertion direction may be approximately perpendicular to the approaching direction. With this structure, the front wall 175 is less likely to interfere with the arm during a process in which the arm moves in the approaching direction and is aligned with the insertion direction.

Reinforcing ribs 178 may protrude from an outer surface of the accommodation portion 173. Specifically, the reinforcing rib 178 may be formed on the upper wall 177. Because the largest load is applied to the upper wall 177 when the arm is inserted into the insertion space 173' and moves upward, it is advantageous to reinforce strength of the upper wall 177.

In addition, the grip unit 170 may further have the fusion protrusions 179. The fusion protrusions 179 may be formed not only on the accommodation portion 173 but also on the support portion 171. In a state in which the fusion protrusions 179 are inserted into insertion holes (not illustrated) of the first mounting cover 141, the fusion protrusions 179 are melted, such that the fusion protrusions 179 may be attached to the first mounting cover 141.

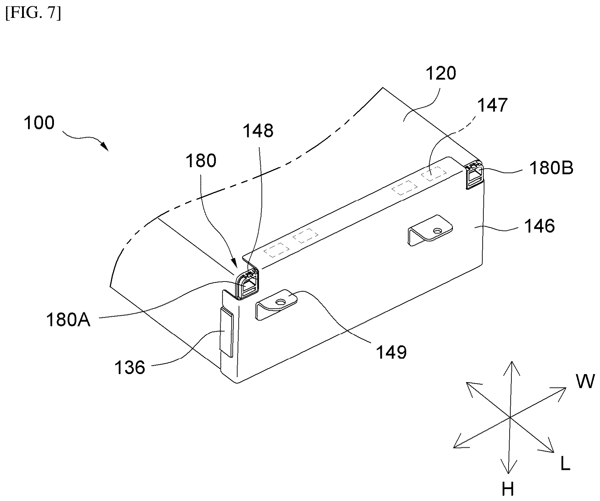

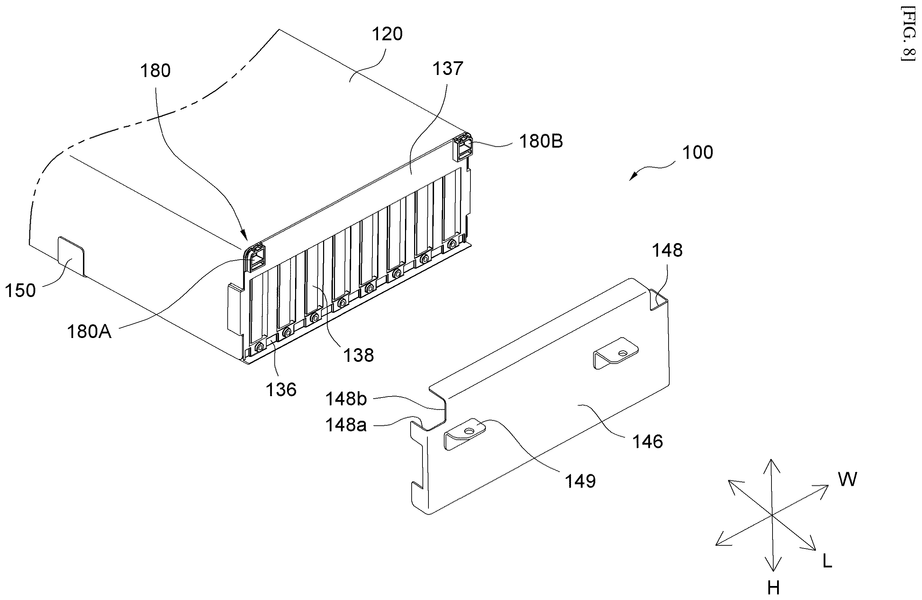

The grip units 170 positioned adjacent to the front surfaces of the battery cells 110 have been described above. Hereinafter, grip units 180 positioned adjacent to the rear surfaces of the battery cells 110 will be described with reference to FIGS. 7 and 8. In order to distinguish the two grip units, the former grip unit may be referred to as a front or first grip unit, and the latter grip unit 180 may be referred to as a rear or second grip unit.

FIG. 7 is an assembled perspective view illustrating the battery module in FIG. 1 in another direction, and FIG. 8 is an exploded perspective view illustrating a state in which the second mounting cover in FIG. 7 is separated.

With reference to the present drawings, the battery cell 110 may further include the (rear) grip unit 180 positioned adjacent to the rear surface. The grip unit 180, together with the grip unit 170, may be connected to the arms and used for the transfer apparatus to transfer the battery cell 110.

The grip units 180 may be coupled to the second busbar block 136. The grip units 180 are disposed so as not to overlap inner connection bars 138 of the second busbar block 136. The inner connection bars 138 connect adjacent electrode leads 115 (FIG. 2) of the battery cells 110 at the side of the rear surface.

Similar to the front grip units 170, the grip units 180 may be provided as a pair of grip units 180A and 180B. The pair of grip units 180A and 180B may be respectively referred to as a left grip unit 180A and a right grip unit 180B based on FIG. 7.

The left grip unit 180A and the right grip unit 180B may be respectively positioned in corner regions at two opposite sides of an upper portion of the second busbar block 136. The left grip unit 180A and the right grip unit 180B may be coupled to the second busbar block 136 and connected to the arms by connection channels 148 of the second mounting cover 146. Because the configurations of the left grip unit 180A and the right grip unit 180B are approximately identical to each other, the left grip unit 180A and the right grip unit 180B will be described below with reference to the left grip unit 180A.

The connection channel 148 allows the arm to approach the grip unit 180 in the longitudinal direction L and be connected to the grip unit 180. For example, the connection channel 148 may be a portion (partially cut-out portion or opening) removed from the second mounting cover 146.

In the present embodiment, the connection channel 148 is formed by removing a corner region of the second mounting cover 146. Specifically, the connection channel 148 may have a shape cut only along two cut surfaces 148a and 148b. In this case, in case that one cut surface 148a is aligned with a first plane including straight lines defined in the longitudinal direction L and the width direction W, and the other cut surface 148b may be aligned with a second plane including straight lines defined in the height direction H and the longitudinal direction L. The two cut surfaces 148a and 148b may intersect each other, for example, may be perpendicular to each other. Because the connection channels 148 are formed in the corner regions of the second mounting cover 146, there is no great limitation in forming welded portions 147 laser-welded to couple the second mounting cover 146 to the top cover 120. Even though the welded portions 147 are positioned in the vicinity of the corner regions, it is possible to ensure sufficient coupling strength between the second mounting cover 146 and the top cover 120. On the contrary, the connection channel 148 may have a closed configuration or may be a portion made of a material (e.g., film) having flexibility.

With the above-mentioned configuration, the arms may be coupled to the front grip units 170 and the rear grip units 180. In order to implement the coupling, a direction in which the arm is inserted into the front grip unit 170 and a direction in which the arm is inserted into the rear grip unit 180 may be different from each other.

Unlike the above-mentioned configuration, the arm may be coupled to only one of the front grip unit 170 and the rear grip unit 180, and the arm may be coupled to fixing brackets 144 and 149 and the like at the side of the surface (the front surface or the rear surface) opposite to one of the front grip unit 170 and the rear grip unit 180.

In an alternative embodiment, the grip units 170 (or the grip units 180) may be uniformly formed on both the front surface and the rear surface. In another alternative embodiment, for example, the grip units 170 and 180 may be combined to constitute the grip units, like a configuration in which the grip unit 180 is disposed at the left side of the front surface and the grip unit 170 is disposed at the right side of the front surface. In still another embodiment, in case that the left grip units 170A and 180A are the first grip units, and the right grip units 170B and 180B may be the second grip units. In this case, the first grip units and the second grip units may be positioned only on the front surface or the rear surface or may be distributed and disposed on the front surface and the rear surface.

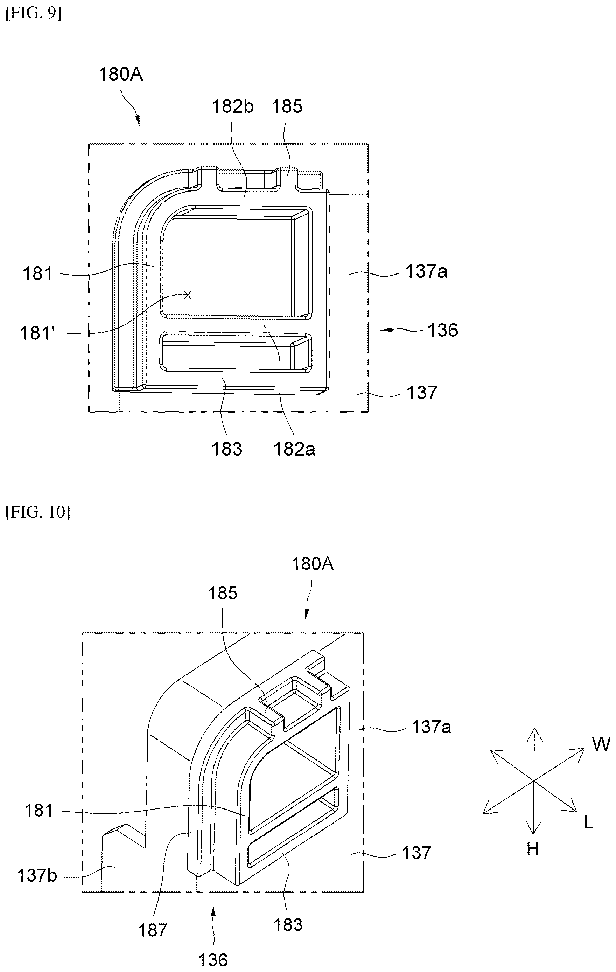

A specific shape of the grip unit 180 will be described with reference to FIGS. 9 and 10. FIG. 9 is an enlarged partial perspective view illustrating the left grip unit in FIG. 8, and FIG. 10 is a partial perspective view illustrating the left grip unit in FIG. 9 at another angle.

With reference to the present drawings, for example, the left grip unit 180A may be integrated with the second busbar block 136. Specifically, the left grip unit 180A may be integrated with a block body 137 of the second busbar block 136 by injection-molding. In this case, an operation of manufacturing the left grip unit 180A separately and coupling the left grip unit 180A to the block body 137 is not required. The left grip unit 180A may protrude in the longitudinal direction L from a peripheral surface 137a of the block body 137. The protruding amount of the left grip unit 180A may be determined within a range in which a size of the battery module 100 in the longitudinal direction L is not increased. Specifically, the protruding amount may be determined within a range in which an end of the left grip unit 180A is not disposed beyond a mounting cover 146.

The restriction to the sizes of the left grip unit 180A, i.e., the grip units 170 and 180 has an important meaning for assembling the battery pack. When the battery modules 100 are continuously disposed and the battery pack is assembled, an available space between the battery module or between the battery modules 100 and a frame of the battery pack is very restrictive. For example, the fixing brackets 144 and 149 may be provided as a pair of brackets spaced apart from a center at different intervals in the width direction W. The brackets of the battery modules disposed continuously may be disposed in a staggered manner in the width direction W. In this case, a thickness of the frame of the battery pack in the longitudinal direction L may be almost equal to a thickness of each of the fixing brackets 144 and 149. In the exemplary embodiment, between the battery modules disposed continuously, the arm may be configured to move in an available space approximately corresponding to the thicknesses of the fixing brackets 144 and 149.

The left grip unit 180A may have an accommodation portion 181 configured to accommodate the arm so that the left grip unit 180A is connected to the arm. The accommodation portion 173 may have a shape opened toward the outside in the protruding direction of the left grip unit 180A, specifically, the longitudinal direction L. Therefore, the arm may approach the accommodation portion 181 in the longitudinal direction L in the direction toward the peripheral surface 137a and be inserted into the accommodation portion 181. The approaching direction and the insertion direction of the arm with respect to the accommodation portion 181 may be equally defined based on the longitudinal direction L.

In the exemplary embodiment, an insertion space 181' of the accommodation portion 181 may be formed to have a depth beyond the peripheral surface 137a of the block body 137 in the longitudinal direction L, more specifically, the direction toward the front surface. In this case, a force, which allows the arm to be inserted into the insertion space 181' and move the accommodation portion 181 upward, may be effectively distributed to the block body 137. In addition, the accommodation portion 181 does not greatly protrude in the longitudinal direction L, and a stroke, which allows the arm to sufficiently move into the insertion space 181', may be ensured. This configuration may further reduce the overall size of the battery module 100, thereby improving the energy density of the battery module 100.

The accommodation portion 181 may have a cross-sectional shape that restricts a motion of the arm in the radial direction from a central axis (defined in the longitudinal direction L) thereof. In the present embodiment, a cross-section of the accommodation portion 181 is exemplarily described as having a quadrangular shape. However, the shape of the cross-section of the accommodation portion 181 is not limited to the quadrangular shape, and the cross-section of the accommodation portion 181 may have a circular shape or another polygonal shape, such as a triangular shape. In addition, a cross-sectional shape of the accommodation portion 181 is not a continuous shape, but may be a shape having a partially removed portion. The accommodation portion 181 may have a quadrangular shape, a triangular shape, or the like as a whole, but a bottom surface of the accommodation portion 181 based on the height direction H may be completely removed.

In order to reinforce the accommodation portion 181, a reinforcing loop 183 and/or reinforcing ribs 185 may be formed. When the reinforcing loop 183 is positioned below the accommodation portion 181, the reinforcing ribs 185 may be positioned above the accommodation portion 181. Therefore, based on the accommodation portion 181, the reinforcing loop 183 and the reinforcing rib 185 are positioned at opposite sides in the height direction H.

The reinforcing loop 183 is connected to the accommodation portion 181. Specifically, a lower wall 182a of the accommodation portion 181 may be an upper wall of the reinforcing loop 183. A space defined by a cross-section of the reinforcing loop 183 may be smaller than a space defined by a cross-section of the accommodation portion 181. A length of the reinforcing loop 183 in the width direction W may be approximately equal to that of the accommodation portion 181.

The reinforcing rib 185 is formed on an outer surface of the accommodation portion 181. Specifically, the reinforcing rib 185 may protrude from an outer surface of an upper wall 182b of the accommodation portion 181. The reinforcing rib 185 may extend in the longitudinal direction L.

In addition, the left grip unit 180A may further have a stop rib 187. The stop rib 187 protrudes from a side surface 137b of the block body 137. The stop rib 187 extends over two adjacent outer surfaces in a corner region of the block body 137. Therefore, the stop rib 187 may have a section extending in the width direction W, and a section extending in the height direction H. In a state in which a part of the block body 137 is inserted into the space defined by the top cover 120, the stop rib 187 prevents the left grip unit 180A from entering the corresponding space. Therefore, the stop rib 187 may allow the block body 137 and the left grip unit 180A to be accurately positioned at preset positions in the longitudinal direction L.

Hereinafter, the transfer head 200 and a transfer method for transferring the battery module will be described with reference to FIGS. 11 to 17.

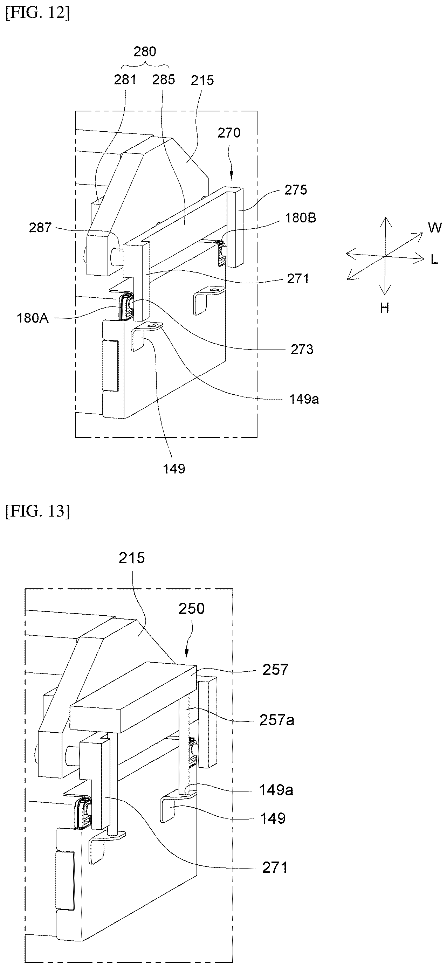

FIG. 11 is a perspective view illustrating a state in which a battery module transfer head according to another embodiment of the present disclosure is connected to the battery module, FIG. 12 is a perspective view illustrating the battery module and the transfer head in a direction different from the direction in FIG. 11, and FIG. 13 is a perspective view illustrating a state in which the battery module and the transfer head are coupled in accordance with a modified example in FIG. 12.

With reference to the present drawings, the transfer head 200 is connected to the battery module 100 to transfer the battery module 100. The battery modules 100 may be combined into a single configuration and assembled as the battery pack. Specifically, the transfer head 200 may include a body 210, first arms 230, first connection units 240, a stopping unit 250, second arms 270, and a second connection unit 280.

The body 210 is a component that serves as an object on which the first arm 230 and the like are installed. Specifically, the body 210 may have a main frame 211 and sub-frames 213 and 215. The main frame 211 may have a shape extending in the longitudinal direction L. The sub-frames 213 and 215 may be installed at two opposite ends of the main frame 211 based on the longitudinal direction L. One 213 of the sub-frames 213 and 215 may be positioned to correspond to the front surface of the battery module 100, and the other sub-frame 215 may be positioned to correspond to the rear surface of the battery module 100. The sub-frames 213 and 215 may be formed to extend in the width direction W. The body 210 may have a size approximately corresponding to a size of the battery module 100.

The first arms 230 are components configured to be connected to the first grip units 170. The first arms 230 are movably installed on the first sub-frame 213 and positioned to correspond to the first grip units 170. Specifically, the first arms 230 may include a first-first arm 231 configured to be connected to the left or first-first grip unit 170A, and a first-second arm 235 configured to be connected to the right or first-second grip unit 170B. For example, the first-first arm 231 may have a (first) finger 233 configured to be inserted into the first-first grip unit 170A. The configuration of the first-second arm 235 may be approximately identical to the configuration of the first-first arm 231, but disposed to be directed in a direction different from a direction in which the first-first arm is directed.

The first connection units 240 are components that connect the first arms 230 to the first grip units 170. To this end, the first connection units 240 are installed on the body 210 and configured to move the first arms 230 toward the first grip units 170, e.g., in the width direction W. Specifically, the first connection units 240 may include a first-first connection unit 241 configured to move the first-first arm 231 to the first-first grip unit 170A, and a first-second connection unit 245 configured to move the first-second arm 235 to the first-second grip unit 170B. The first-first connection unit 241 may be connected to the first-first arm 231 through a connection shaft 242 and allow the first-first arm to move linearly. For example, the first-first connection unit 241 may be a hydraulic/pneumatic cylinder, a linear motor, or the like. A support shaft 243 may be disposed in parallel with the connection shaft 242. The support shaft 243 may be installed to be movable relative to the body 210 in a state in which the support shaft 243 is connected to the first-first arm 231. The first-second connection unit 245 may be configured to be approximately identical to the first-first connection unit 241.

The stopping unit 250 is a component that stops the body 210 at a preset position based on the height direction H with respect to the battery module 100. Specifically, the stopping unit 250 may include a position detector 251 and position regulators 255.

The position detector 251 is a component that detects whether the body 210 reaches the preset position while moving downward in the height direction H. The position detector 251 may have a displacement rod 251a configured to be compressed when the displacement rod 251a comes into contact with the battery module 100. The displacement rod 251a may be installed on the position regulator 255, which will be described below, and arranged to extend in the height direction H. On the contrary, the displacement rod 251a may be installed on the body 210, specifically, the main frame 211. In a state in which the displacement rod 251a is not in contact with the battery module 100, the displacement rod 251a is restored by a spring 251b to a state made before compression. When the position detector 251 detects the preset position, the transfer apparatus may decrease a speed of the transfer head 200 that moves toward the battery module 100, and the transfer apparatus may finally stop the transfer head 200 at the preset position. Unlike the above-mentioned configuration, a sensor, e.g., an optical sensor or the like, which measures a distance from the battery module 100 without contact with the battery module 100, may be adopted as the position detector 251.

The position regulators 255 are components that maintain the body 210 at the preset position. The position regulators 255 may include first regulators 256 and a second regulator 257. The first regulators 256 prevent the body 210 from moving downward from the preset position in the height direction H. To this end, the first regulators 256 may be coupled to the body 210 and configured to support corner portions of the battery module 100. The first regulator 256 may have a shape in which two opposite ends of a body extending in the width direction W are bent in the height direction H. The first regulators 256 may be disposed to correspond to two opposite sides of the main frame 211. In the present embodiment, the first regulators 256 may be provided as two pairs of first regulators 256 corresponding to one another based on the main frame 211. Further, the first regulator 256 may be additionally provided between the first-first arm 231 and the first-second arm 235. The second regulator 257 may be coupled to the second sub-frame 215. The second regulator 257 may include insertion rods 257a configured to be inserted into accommodation holes 149a of the fixing brackets 149 when the transfer head 200 moves in the height direction H. When the insertion rods 257a are inserted into the accommodation portions 181, the body 210 does not move in the longitudinal direction L and the width direction W relative to the battery module 100. The insertion rods 257a may also be provided as a pair of insertion rods 257a while corresponding to the pair of fixing brackets 149. All the first regulators 256 and the second regulator 257 may be adopted. In contrast, only one of the first regulators 256 and the second regulator 257 may be adopted.

The second arms 270 are components configured to be connected to the second grip units 180. The second arms 270 are movably installed on the second sub-frame 215, and specifically, the second arms 270 are positioned to correspond to the second grip units 180. Specifically, the second arms 270 may include a second-first arm 271 configured to be connected to the left or second-first grip unit 180A, and a second-second arm 275 configured to be connected to the right or second-second grip unit 180B. For example, the second-first arm 271 may have a (second) finger 273 configured to be inserted into the second-first grip unit 180A. The configuration of the second-second arm 275 may be approximately identical to the configuration of the second-first arm 271.

The second connection unit 280 is a component that connects the second arms 270 to the second grip units 180. To this end, the second connection unit 280 is installed on the body 210 and configured to move the second arms 270 toward the second grip units 180, e.g., in the longitudinal direction L. Unlike the first connection units 240, the second connection unit 280 may have a single actuator 281. The actuator 281 may be installed on the body 210. The actuator 281 is connected to a mounting frame 285, and the second-first arm 271 and the second-second arm 275 are connected to the mounting frame 285. When the actuator 281 moves the mounting frame 285 linearly, the second-first arm 271 and the second-second arm 275 moves together with the mounting frame 285. The actuator 281 may be a hydraulic/pneumatic cylinder, a linear motor, or the like. In addition, the mounting frame 285 may be connected to guide shafts 287 and supported by the guide shafts 287 when the mounting frame 285 moves in the longitudinal direction L. The guide shaft 287 may be movably inserted into the sub-frame 215.

In this case, the second sub-frame 215 may be disposed so as not to extend beyond the end of the battery module 100 in the longitudinal direction L. With this configuration, the end of the mounting frame 285 may not depart from the fixing bracket 149 even at a position at which the mounting frame 285 is maximally distant from the battery module 100.

The transfer head 200 may not adopt the first and second connection units 240 and 280 described above. In this case, the first and second arms 230 and 270 may be moved relative to the grip units 170 and 180 by an operator.

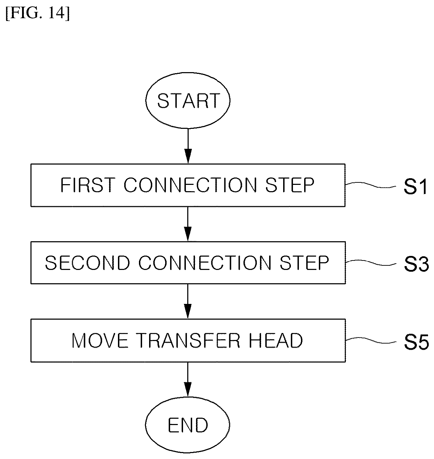

FIG. 14 is a flowchart illustrating a battery module transfer method according to still another embodiment of the present disclosure.

With reference to the present drawing, in order to transfer the battery module 100, the first arms 230 of the transfer head 200 are connected to the first grip units 170 by the operations of the first connection units 240. This process may be referred to as a first connection step S1.

The second arm 270 of the transfer head 200 is connected to the second grip units 180 by the operation of the second connection unit 280. This process may be referred to as a second connection step S3.

Thereafter, the transfer apparatus moves the transfer head 200 to transfer the battery module 100 to another location. The plurality of battery modules 100 may be transferred to one location and assembled as the battery pack.

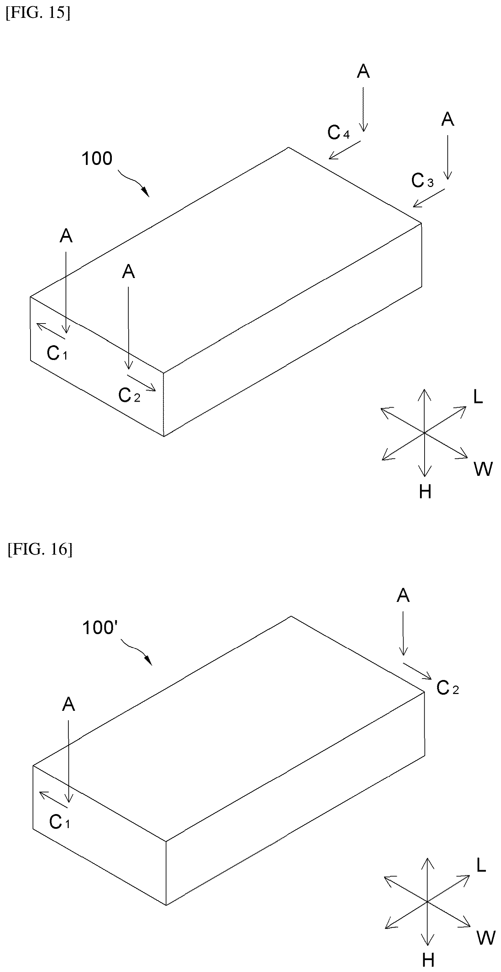

FIG. 15 is a conceptual view illustrating a method of connecting the transfer head to the battery module.

With reference to the present drawings (and FIGS. 11 to 12), a connection direction (first direction) in which the first arm 230 is connected to the first grip unit 170 may be defined based on the width direction W. In contrast, a connection direction (second direction) in which the second arm 270 is connected to the second grip unit 180 may be defined based on the longitudinal direction L. As a result, the connection direction of the first arm 230 may be defined based on a direction intersecting, specifically, perpendicular to the connection direction of the second arm 270.

A connection direction C1 in which the first-first arm 231 is connected to the first-first grip unit 170A is a direction of the width direction W toward the left side in the drawings. In contrast, a connection direction C2 in which the first-second arm 235 is connected to the first-second grip unit 170B is a direction of the width direction W toward the right side in the drawings. As a result, the connection direction C1 of the first-first arm 231 may be a direction different from the connection direction C2 of the first-second arm 235. Specifically, the connection direction C1 and the connection direction C2 may be opposite directions.

Both a connection direction C3, in which the second-first arm 271 is connected to the second-first grip unit 180A, and a connection direction C4, in which the second-second arm 275 is connected to the second-second grip unit 180B, may be defined based on the longitudinal direction L. The connection directions C3 and C4 of the grip units 180A and 180B may be directions of the longitudinal direction L that are identical to each other, specifically, directions toward the rear surface of the battery module 100.

In the first connection step S1 and the second connection step S3 (see FIG. 13), the arms 230 and 270 need to approach the grip units 170 and 180 before the arms 230 and 270 are connected to the grip units 170 and 180. An approaching direction A of the arms 230 and 270 may be a direction defined based on the height direction H, and the approaching direction A may be a direction toward the lower side in the drawings. This direction may be a direction in which the transfer head 200 moves downward toward the battery module 100. As a result, the approaching direction A may be the same direction for both the first arm 230 and the second arm 270.

FIG. 16 is a conceptual view illustrating another method of connecting the transfer head to the battery module.

With reference to the present drawings (and FIGS. 11 to 12), unlike the previous battery module 100, a battery module 100' may be configured such that the first-first grip unit 170A is positioned adjacent to the front surface, and the first-second grip unit 170B is positioned adjacent to the rear surface.

In this case, the first-first arm 231 may move in the connection direction C1 from the front surface, and the first-second arm 235 may move in the connection direction C2 relative to the rear surface. The connection directions C1 and C2 are still defined based on the width direction W. In addition, the connection direction C1 and the connection direction C2 are directed in the opposite directions.

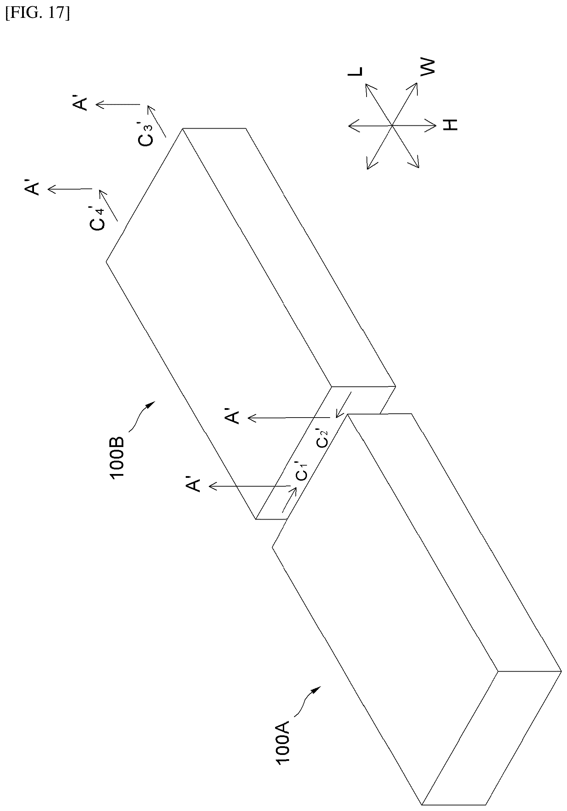

FIG. 17 is a conceptual view illustrating a case in which the battery modules are continuously disposed and then the transfer head is separated from the battery module.

With reference to the present drawings additionally, even though battery modules 100A and 100B are sequentially disposed in the longitudinal direction L during the process of assembling the battery pack, the battery module 100A, which is disposed previously, may not obstruct the movement of the first arm 230 to the battery module 100B disposed subsequently. This is because the movement of the first arm 230 may not be obstructed by the adjacent battery module 100A in the longitudinal direction L as the first arm 230 moves in the width direction W (C1' and C2') in order to disconnect the battery module 100B from the first grip unit 170.

In order to disconnect the battery module 100B from the second grip unit 180, the second arm 270 needs to move in the longitudinal direction L. Because a range in which the second arm 270 moves (C3' and C4') in the longitudinal direction L relative to the rear surface of the battery module 100B may substantially correspond to the thickness of the fixing bracket in the longitudinal direction L as described above, the movement of the second arm 270 is not obstructed by other battery module or frames disposed around the second arm 270.

### [Industrial Applicability]

The present disclosure is industrially available in a battery module transfer field.

## Claims

1. A battery module transfer method comprising:
a first connection step of connecting a first arm of a transfer head to a first grip unit of a battery module;
a second connection step of connecting a second arm of the transfer head to a second grip unit of the battery module; and
a step of moving the transfer head to transfer the battery module,
wherein a connection direction in which the first arm is connected to the first grip unit is a direction intersecting a connection direction in which the second arm is connected to the second grip unit.

2. The battery module transfer method of claim 1, wherein the connection direction in which the first arm is connected to the first grip unit is a direction perpendicular to the connection direction in which the second arm is connected to the second grip unit.

3. The battery module transfer method of claim 1, wherein the connection direction in which the second arm is connected to the second grip unit is defined based on a longitudinal direction of the battery module, and the connection direction in which the first arm is connected to the first grip unit is defined based on a width direction of the battery module intersecting the longitudinal direction.

4. The battery module transfer method of claim 1, wherein the connection direction is a direction in which one of the first and second arms is inserted into one of the first and second grip units corresponding to one of the first and second arms.

5. The battery module transfer method of claim 1, wherein the first connection step comprises:
a step of connecting the first-first arm to the first-first grip unit; and
a step of connecting the first-second arm to the first-second grip unit, and
wherein a connection direction in which the first-first arm is connected to the first-first grip unit is a direction different from a connection direction in which the first-second arm is connected to the first-second grip unit.

6. The battery module transfer method of claim 5, wherein the connection direction in which the first-first arm is connected to the first-first grip unit is a direction opposite to the connection direction in which the first-second arm is connected to the first-second grip unit.

7. The battery module transfer method of claim 1, wherein the first connection step comprises a step of allowing the first arm to approach the first grip unit before the first arm is connected to the first grip unit,
wherein the second connection step comprises a step of allowing the second arm to approach the second grip unit before the second arm is connected to the second grip unit, and
wherein an approaching direction in which the first arm approaches the first grip unit is a direction identical to an approaching direction in which the second arm approaches the second grip unit.

8. A battery module transfer method comprising:
a step of connecting a first-first arm of a transfer head to a first-first grip unit of a battery module;
a step of connecting a first-second arm of the transfer head to a first-second grip unit of the battery module; and
a transfer step of moving the transfer head to transfer the battery module,
wherein a connection direction in which the first-first arm is connected to the first-first grip unit is a direction opposite to a connection direction in which the first-second arm is connected to the first-second grip unit.

9. The battery module transfer method of claim 8, wherein the first-first arm and the first-second arm move in a width direction intersecting a longitudinal direction of the battery module so as to be connected to one of the first-first grip unit and the first-second grip unit corresponding to one of the first-first arm and the first-second arm.

10. A battery module transfer head comprising:
a body;
a first arm movably installed on the body and positioned to correspond to a first grip unit of a battery module;
a first connection unit configured to move the first arm and connect the first arm to the first grip unit;
a second arm movably installed on the body and positioned to correspond to a second grip unit of the battery module; and
a second connection unit configured to move the second arm and connect the second arm to the second grip unit,
wherein a connection direction in which the first connection unit connects the first arm to the first grip unit intersects a connection direction in which the second connection unit connects the second arm to the second grip unit.

11. The battery module transfer head of claim 10, wherein the first grip unit comprises a first-first grip unit and a first-second grip unit disposed to face each other,
wherein the first arm comprises:
a first-first arm formed to correspond to the first-first grip unit; and
a first-second arm formed to correspond to the first-second grip unit,
wherein the first connection unit comprises:
a first-first connection unit configured to connect the first-first arm to the first-first grip unit; and
a first-second connection unit configured to connect the first-second arm to the first-second grip unit, and
wherein a connection direction in which the first-first connection unit connects the first-first arm to the first-first grip unit is a direction opposite to a connection direction in which the first-second connection unit connects the first-second arm to the first-second grip unit.

12. The battery module transfer head of claim 10, wherein the second grip unit comprises a second-first grip unit and a second-second grip unit,
wherein the second arm comprises:
a second-first arm formed to correspond to the second-first grip unit; and
a second-second arm formed to correspond to the second-second grip unit, and
wherein the second connection unit is configured to move the second-first arm and the second-second arm in the same direction.

13. The battery module transfer head of claim 12, wherein the second connection unit comprises:
a mounting frame on which the second-first arm and the second-second arm are installed; and
an actuator configured to operate the mounting frame straight.

14. A battery module transfer head comprising:
a body;
a first-first arm movably installed on the body and positioned to correspond to a first-first grip unit of a battery module;
a first-first connection unit configured to move the first-first arm and connect the first-first arm to the first-first grip unit;
a first-second arm movably installed on the body and positioned to correspond to a first-second grip unit of the battery module; and
a first-second connection unit configured to move the first-second arm and connect the first-second arm to the first-second grip unit,
wherein a connection direction in which the first-first connection unit connects the first-first arm to the first-first grip unit is a direction opposite to a connection direction in which the first-second connection unit connects the first-second arm to the first-second grip unit.

15. The battery module transfer head of claim 14, wherein the first-first arm and the first-second arm are configured to move in a width direction intersecting a longitudinal direction of the battery module so as to be connected to one of the first-first grip unit and the first-second grip unit corresponding to one of the first-first arm and the first-second arm.

16. A battery module transfer head comprising:
a body;
a first arm installed on the body, configured to be movable in a first direction, and positioned to correspond to a first grip unit of a battery module; and
a second arm installed on the body, configured to be movable in a second direction, and positioned to correspond to a second grip unit of the battery module,
wherein the first arm comprises a first finger configured to be connected to the first grip unit when the first finger moves in the first direction,
wherein the second arm comprises a second finger configured to be connected to the second grip unit when the second finger moves in the second direction, and
wherein the first direction and the second direction are set to intersect each other.

17. The battery module transfer head of claim 16, wherein one of the first and second fingers is formed to be inserted into one of the first and second grip units so as to be connected to one of the first and second grip units.

18. The battery module transfer head of claim 16, further comprising:
a stopping unit installed on the body and configured to stop the body at a preset position with respect to the battery module.

19. The battery module transfer head of claim 18, wherein the stopping unit comprises an insertion rod configured to be inserted into an accommodation hole of a fixing bracket of the battery module when the body moves toward the battery module.

20. The battery module transfer head of claim 18, wherein the stopping unit comprises a position detector configured to detect whether the body reaches the preset position while the body moves toward the battery module.
